# EUROPEAN PATENT APPLICATION

(11) **EP 4 799 889 A1**
(43) Date of publication of application: **02.09.2026**
(21) Application number: 24897886.8
(22) Date of filing: 23.10.2024
(51) Int. Cl.: B60W 40/02, B60W 40/10, G01S 13/86, G01S 13/50, G01S 13/536

(54) **RADAR DETECTION DEVICE AND METHOD FOR CONSTRUCTION EQUIPMENT WITH IMPROVED RADAR MAL-DETECTION**

(30) Priority: 29.11.2023 KR 20230169498; 22.10.2024 KR 20240145021
(71) Applicant: Hyundai M Systems Corporation, Suwon-si, Gyeonggi-do 16681 (KR)
(72) Inventor: CHANG, Taehwa, Yongin-si Gyeonggi-do 17066 (KR); KIM, Yongjin, Seoul 07982 (KR)
(74) Representative: Isarpatent
(86) International application number: PCT/KR2024/016130
(87) International publication number: WO 2025/116288

(57) **Abstract**

According to an embodiment of the present disclosure, a radar detection device for construction equipment may comprise: a radar configured to detect an object around the construction equipment; a tilt sensor configured to detect a tilt of the construction equipment; a swing angle sensor configured to detect a swing angle of the construction equipment; and a detection server configured to determine whether an object is present around the construction equipment by communicating with the radar, the tilt sensor, and the swing angle sensor.

## Description

### TECHNICAL FIELD

The present disclosure relates to a radar detection device and method for construction equipment, and more particularly, to a radar detection device and method for construction equipment with improved mal-detection when monitoring obstacles around the construction equipment using a radar.

### BACKGROUND OF THE INVENTION

Construction sites are exposed to the risk of safety accidents because various types of construction equipment are used. For the past several decades, many efforts have been made regarding the safety of construction equipment, but the practical achievements have been insignificant.

The reason for this is that there are fundamentally not many safety solutions that can be applied to construction equipment. An ultrasonic sensor, which is widely used for rear detection in automobiles, is vulnerable to vibrations and thus is not easy to apply to construction equipment. Although some companies have installed ultrasonic sensors on construction equipment, there are cases where they have withdrawn due to damage caused by vibrations.

In the case of LiDAR, which is in the spotlight in the field of autonomous driving, it is an efficient method that can detect approaching objects. However, LiDAR is not suitable for construction sites with severe conditions such as dust and muddy water.

Currently, the most widely used safety solutions for construction equipment are cameras and radars. Among them, the radar has been receiving attention as an efficient means that can detect approaching objects even in harsh construction site environments. Recently, as research on radars has become active in the autonomous driving automobile field, there has been a desire to expand the application of radars to construction equipment as well.

A radar is generally used for the purpose of detecting an approaching object, and is particularly in the spotlight as an important element for safety in construction equipment that operates in dangerous industrial sites. However, a conventional radar had a problem of mal-detection. In a special environment such as a construction site, a conventional radar would erroneously recognize the ground or the construction equipment itself as an approaching object. This mal-detection became a factor that degraded the reliability of the radar, and it also became a reason for users to avoid using the radar.

In conventional construction equipment, there was a problem of a self reflection phenomenon occurring, where the upper body of the construction equipment swings and detects the lower body of the construction equipment. For example, in conventional construction equipment, there was a problem where a radar detected a caterpillar as an obstacle. Conventional construction equipment did not have an efficient way to remove a reflection component by the construction equipment itself, so it became a stumbling block in expanding the application of radars to construction equipment, just like ground reflection. This is because a radar uses a method of utilizing reflected waves for a proximate object using radio waves, so there is no way to distinguish a reflection component by the ground or the body of the construction equipment.

Meanwhile, if an imaging technique is introduced, a component reflected by the ground or the body of the construction equipment can be easily identified. However, a technique of mounting a camera on construction equipment and removing ground reflection or self reflection of the radar through learning thereof is unsuitable for a dusty construction site, and has a disadvantage of requiring a large cost increase.

To solve such problems, Korean Patent Publication No. 10-2016- 0140113 discloses a safety system and method for monitoring the surroundings of construction equipment, which uses impulse radar sensor technology and wireless communication technology to more easily detect a worker or an object around the construction equipment and quickly notify the construction equipment operator of the detected risk information through notification and alarm. However, even in this case, there is a disadvantage in that it cannot accurately distinguish between a person and an obstacle under special conditions.

Existing construction equipment does not have an efficient way to remove a reflection component by the construction equipment itself, so it has been a stumbling block in expanding the application of radars to construction equipment, just like ground reflection.

### SUMMARY OF THE INVENTION

### TECHNICAL PROBLEM

A technical problem to be solved by the present disclosure is to provide a radar detection device and method for construction equipment with improved mal-detection when monitoring obstacles around the construction equipment using a radar.

The technical problems to be solved by the present disclosure are not limited to the aforementioned technical problems, and other unmentioned technical problems will be clearly understood by a person of ordinary skill in the art to which the present disclosure pertains from the following description.

### TECHNICAL SOLUTION

In accordance with an embodiment of the present disclosure for achieving the aforementioned objects, a radar detection device for construction equipment may comprise: a radar configured to detect an object around the construction equipment; a tilt sensor configured to detect a tilt of the construction equipment; a swing angle sensor configured to detect a swing angle of the construction equipment; and a detection server configured to determine whether an object is present around the construction equipment by communicating with the radar, the tilt sensor, and the swing angle sensor.

Furthermore, the detection server may determine whether an object is present around the construction equipment using a tilt value received through the tilt sensor and a reflection component detected by the radar, and when the detected object is determined to be an extensive object, may determine the object to be ground.

Furthermore, the measured values of the tilt sensor and the swing angle sensor may be corrected by applying a Kalman filter, and the reflection component of the radar for determining whether an object is present may be selected based on the corrected measured values of the tilt sensor and the swing angle sensor.

Furthermore, the extensive object may be an object simultaneously detected within an azimuth range of the radar.

Furthermore, the detection server may determine a detected object to be ground when a tilt value received through the tilt sensor is equal to or greater than a preset tilt threshold value.

Furthermore, the detection server may further comprise a processor, and the processor may repeatedly learn and accumulate a process of determining a detected object to be ground, and may determine the object to be ground based on the accumulated learning information.

Furthermore, the reflection component of the radar for determining whether an object is present may be a reflection component secondarily selected by applying a Kalman filter to a reflection component primarily selected based on the corrected measured values of the tilt sensor and the swing angle sensor.

In accordance with an embodiment of the present disclosure for achieving the aforementioned objects, a radar detection device for construction equipment may comprise: a radar configured to detect an object around the construction equipment; a swing angle sensor configured to detect a swing angle of the construction equipment; and a detection server configured to determine whether an object is present around the construction equipment by communicating with the radar and the swing angle sensor.

Furthermore, the detection server may determine whether an object is present around the construction equipment using a swing angle value received through the swing angle sensor and a reflection component detected by the radar, and when the detected object is repeatedly detected at a same location, may determine the object to be self reflection of the construction equipment.

Furthermore, the measured value of the swing angle sensor may be corrected by applying a Kalman filter, and the reflection component of the radar for determining whether an object is present may be selected based on the corrected measured value of the swing angle sensor.

Furthermore, the detection server may further comprise a processor. The processor may repeatedly learn and accumulate a process of determining a detected object to be self reflection of the construction equipment, and may determine the detected object to be self reflection of the construction equipment based on the accumulated learning information.

Furthermore, the radar may output a Doppler frequency generated according to a swing motion of the construction equipment, leading to recognition as a proximate obstacle when the Doppler frequency indicates a positive or negative Doppler frequency.

In accordance with an embodiment of the present disclosure for achieving the aforementioned objects, a method for detecting an obstacle using a radar detection device for construction equipment with improved radar mal-detection, may comprise: a step in which a detection server detects an approach of an object based on output information of a radar; a step in which the detection server determines whether the detected object is an extensive object; a step in which the detection server determines whether a tilt of the ground is equal to or greater than a preset threshold value; and a step in which the detection server determines the detected object to be ground when it is determined that the detected object is an extensive object and the tilt of the ground is equal to or greater than the preset threshold value.

Furthermore, in the step of detecting the approach of the object, the tilt of the ground may be measured using a tilt sensor; a swing angle of the construction equipment may be measured using a swing angle sensor; the measured values of the tilt sensor and the swing angle sensor may be corrected by applying a Kalman filter; and the output information of the radar for detecting an approach of an object may be selected based on the corrected measured values of the tilt sensor and the swing angle sensor.

Furthermore, in the step of determining whether the object is an extensive object, the detection server may determine an object simultaneously detected within an azimuth range of the radar to be the extensive object.

### ADVANTAGEOUS EFFECTS

According to an embodiment of the present disclosure, a caterpillar detected due to the swinging of construction equipment may be determined as a self reflection component, so there is an effect of reducing mal-detection of a radar detection device for construction equipment and increasing reliability.

Furthermore, according to an embodiment of the present disclosure, even when a radar swings, a proximate obstacle may be detected using Doppler frequency characteristics, and accordingly, there is an effect of preventing a safety accident.

Furthermore, according to an embodiment of the present disclosure, even when construction equipment is located on inclined terrain, reflection by the ground may be recognized, so mal-detection of the radar detection device for construction equipment may be reduced and reliability may be increased.

Furthermore, according to an embodiment of the present disclosure, ground reflection and self reflection may be detected using a radar, a tilt sensor, and a swing angle sensor without mounting a high-cost camera, so there is an effect of reducing manufacturing costs.

The effects of the present disclosure are not limited to the aforementioned effects, and it is to be understood that all effects that can be inferred from the configuration of the disclosure described in the description or claims of the present disclosure are included.

### BRIEF DESCRIPTION OF THE DRAWINGS

FIG. 1 is a diagram schematically illustrating a radar detection device for construction equipment with improved radar mal-detection 100 according to an embodiment of the present disclosure.
FIG. 2 is a diagram schematically illustrating construction equipment 200 on which the radar detection device for construction equipment 100 illustrated in FIG. 1 is mounted.
FIG. 3 and FIG. 4 are diagrams illustrating a swinging state of the construction equipment 200 illustrated in FIG. 2.
FIG. 5 is a graph illustrating Doppler characteristics of a radar 10 when the construction equipment 200 illustrated in FIG. 2 rotates.
FIG. 6 is a diagram schematically illustrating a case where a radar detection device for construction equipment 100 according to an embodiment of the present disclosure detects a person 300.
FIG. 7a and FIG. 7b are diagrams schematically illustrating ground reflection of construction equipment 200 in an embodiment of the present disclosure.
FIG. 8 is a diagram illustrating a case where a radar detection device for construction equipment 100 according to an embodiment of the present disclosure detects the ground.
FIG. 9 is a diagram schematically illustrating a case where a radar detection device for construction equipment 100 according to an embodiment of the present disclosure simultaneously detects the ground and a person.
FIG. 10 is a flowchart illustrating a ground detection method of a radar detection device for construction equipment 100 according to an embodiment of the present disclosure.
FIG. 11 is a flowchart illustrating a self reflection detection method of a radar detection device for construction equipment 100 according to an embodiment of the present disclosure.

### DETAILED DESCRIPTION OF THE EMBODIMENTS

Hereinafter, the present disclosure is described with reference to the accompanying drawings. However, the present disclosure may be embodied in many different forms and is not to be construed as limited to the embodiments set forth herein. In the drawings, parts irrelevant to the description are omitted to clearly describe the present disclosure, and like reference numerals refer to like elements throughout the specification.

Throughout the specification, when a part is referred to as being "connected (accessing, contacting, coupling)" to another part, it may be "directly connected" or "indirectly connected" with another member interposed therebetween. In addition, when a part "comprises" a certain component, it means that it may further comprise other components, not excluding other components unless there is a special statement to the contrary.

The terms used in this specification are only used to describe specific embodiments, and are not intended to limit the present disclosure. A singular expression includes a plural expression unless the context clearly indicates otherwise. In this specification, terms such as "comprise" or "have" are intended to indicate that there is a described feature, number, step, operation, component, part, or a combination thereof, and they are to be understood as not precluding the possibility of the presence or addition of one or more other features, numbers, steps, operations, components, parts, or combinations thereof.

The artificial intelligence neural network mentioned in this specification may be a neural network trained through a supervised learning method. The supervised learning is a method of machine learning for inferring a function from training data. Among such inferred functions, outputting a continuous value is called regression, and predicting and outputting a class of an input vector is called classification. In supervised learning, an artificial neural network is trained in a state where a label for training data is given. The label may mean a correct answer (or a result value) that the artificial intelligence neural network should infer when the training data is input to the artificial intelligence neural network. A correct answer that the artificial intelligence neural network should infer when training data is input may be called a label or labeling data, and setting a label for training data for the learning of the artificial intelligence neural network may be called labeling. In this case, the training data and the label corresponding to the training data constitute a training set, and may be input to the artificial intelligence neural network in the form of the training set. Meanwhile, the training data represents a plurality of features, and that a label is labeled on the training data means that a label is attached to the features represented by the training data. In this case, the training data may represent the features of an input object in a vector form. The artificial intelligence neural network may infer a function for a correlation between the training data and the labeling data using the training data and the labeling data. And, through evaluation of the function inferred in the artificial intelligence neural network, parameters of the artificial intelligence neural network may be determined (optimized). As an index for evaluating the inferred function, a loss function may be used. The loss function is a score value created by receiving a correct answer and a prediction as input, and is an index that determines how well the neural network predicted the correct answer. The smaller the value of this loss function, the greater the prediction accuracy of the artificial intelligence neural network. The loss function may be appropriately selected according to a specific problem or data set.

An RNN (Recurrent Neural Network) model mentioned in this specification refers to a neural network structure designed to handle temporal dependencies of sequential data. This model operates in a way that it remembers information from a previous time point as input data comes in sequentially, and processes it by combining it with information from the current time point. An input layer of an RNN receives data for each time point, and the input data is mainly represented in a vector form. The data that has passed through the input layer is transmitted to a hidden layer, and in the hidden layer, a new hidden state is calculated by combining the input of the current time point and the hidden state of the previous time point. In this process, a weight matrix between the input data and the hidden state is applied, and a bias is added to this and processed by an activation function. As the activation function, for example, a hyperbolic tangent function or a ReLU (Rectified Linear Unit) may be used, and through this, non-linearity is introduced to allow the model to learn complex patterns. A new hidden state is used to calculate an output value at the current time point. An output layer calculates a final output value by utilizing the data from the hidden layer, and this value is passed to the next time point and reflected in the iterative learning process. As a loss function, for example, a cross-entropy loss function may be used, and it is used to update the weights of the model in a direction that minimizes the error in the learning process by measuring the difference between the predicted value of the model and the actual value.

Hereinafter, embodiments of the present disclosure is described in detail with reference to the accompanying drawings.

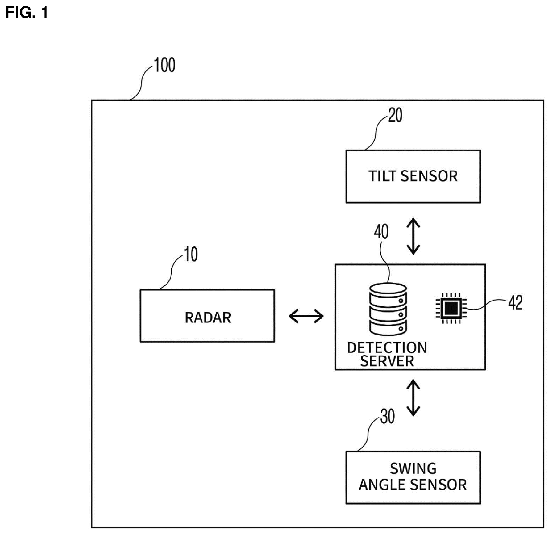

FIG. 1 is a diagram schematically illustrating a radar detection device for construction equipment with improved radar mal-detection 100 according to an embodiment of the present disclosure.

As illustrated in FIG. 1, the radar detection device for construction equipment with improved radar mal-detection 100 according to an embodiment of the present disclosure comprises a radar 10, a tilt sensor 20, a swing angle sensor 30, and a detection server 40.

The radar 10 detects an obstacle around the construction equipment based on RF transmission/reception. The radar 10 may output information on the azimuth, distance, and speed of an obstacle. As a possible example, the radar 10 may be an FMCW (Frequency Modulated Continuous Wave) radar. An FMCW radar transmits a continuously modulated RF (Radio Frequency) signal and measures the distance by analyzing how the frequency changes while the signal is reflected by a target and returns. The distance and speed of the target may be measured simultaneously by analyzing the power and frequency difference of the received signal.

The tilt sensor 20 detects the tilt of the construction equipment. The tilt sensor 20 may be a combination of two or more of a gyro sensor, an acceleration sensor, and a geomagnetic sensor.

The swing angle sensor 30 detects the swing angle of the construction equipment. The construction equipment may be divided into a lower body for driving the construction equipment and an upper body for work of the construction equipment. The upper body of the construction equipment may rotate 360 degrees with respect to the lower body of the construction equipment. The swing angle sensor 30 measures the degree to which the upper body of the construction equipment has swung with respect to the lower body of the construction equipment, i.e., the swing angle. As a possible example, the swing angle sensor 30 may be an IMU (Inertial Measurement Unit).

The detection server 40 communicates with the radar 10, the tilt sensor 20, and the swing angle sensor 30. The detection server 40 determines the presence of an obstacle around the construction equipment using the information received from the radar 10, the tilt sensor 20, and the swing angle sensor 30. The detection server 40 may further comprise a processor 42.

The processor 42 may, for example, refer to a data processing device having a physically structured circuit to perform a function expressed by code or a command included in a program. As an example of such a data processing device, a microprocessor, a central processing unit (CPU), a processor core, a multiprocessor, an ASIC (application-specific integrated circuit), an FPGA (field programmable gate array), a graphics processing unit (GPU), a Neural Processing Unit, and the like may be enumerated, but the scope of the present disclosure is not limited thereto.

The processor 42 may be an artificial intelligence processor that executes a pre-trained artificial intelligence model.

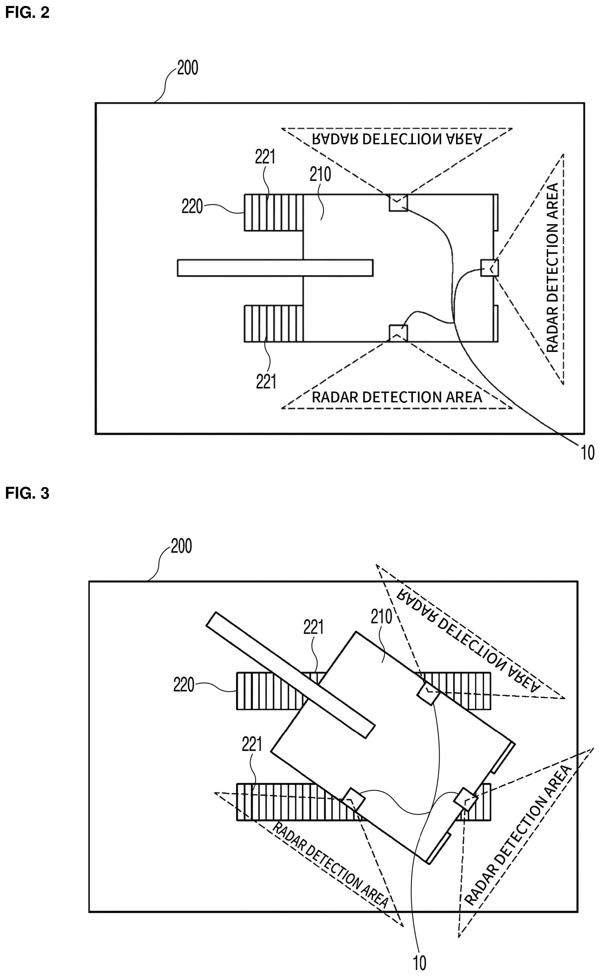

FIG. 2 is a diagram schematically illustrating construction equipment 200 on which the radar detection device for construction equipment 100 illustrated in FIG. 1 is mounted.

As illustrated in FIG. 2, the construction equipment 200 may be divided into an upper body 210 and a lower body 220 for convenience. The upper body 210 is equipped with construction tools for work, and a space is provided where an operator can board and operate the construction equipment 200. The lower body 220 is a part for driving the construction equipment 200, and comprises a track-type driving body called a Caterpillar 221.

The radars 10 are mounted on the upper body 210 of the construction equipment 200. There may be a plurality of radars 10, and three may be provided on the left and right sides and the rear of the construction equipment. Each radar 10 has its own detection area from its mounted position. In a state where the construction equipment 200 does not swing, the three radars 10 transmit RF signals toward the left, right, and rear of the construction equipment 200, and may detect an object detected by a reflected signal as an obstacle. In a state where the construction equipment does not swing, the radar detection areas of the radars 10 do not include the caterpillar 221, so there is no detection error by the caterpillar 221.

The tilt sensor 20 and the swing angle sensor 30 are mounted on the upper body 210 of the construction equipment 200. The mounting positions of the tilt sensor 20 and the swing angle sensor 30 are not particularly limited, but they may be mounted on the front or rear of the upper body 210 of the construction equipment 200.

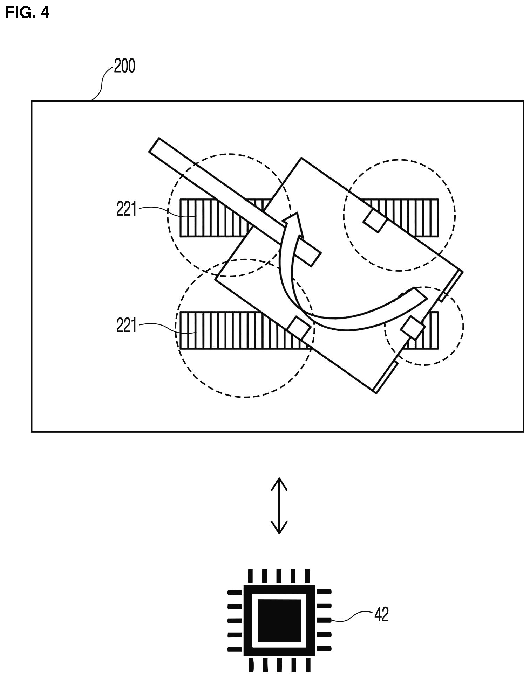

FIG. 3 and FIG. 4 are diagrams illustrating a swinging state of the construction equipment 200 illustrated in FIG. 2.

As illustrated in FIG. 3 and FIG. 4, the upper body 210 of the construction equipment 200 rotates, and a plurality of radars 10 mounted on the upper body 210 also rotate together. Accordingly, the detection areas of the radars 10 are changed. Accordingly, the caterpillar 221 of the lower body 220 of the construction equipment 200 may be included in the detection areas of the radars 10. Comparing FIG. 2 and FIG. 3 together, the caterpillar 221, which was not in the detection areas of the radars 10, may be included in the detection areas of the radars 10 according to the swinging of the construction equipment 200.

In an embodiment of the present disclosure, the radar detection device for construction equipment 100 may use the radars 10 and the swing angle sensor 30 to minimize self reflection of the construction equipment. The processor 42 may recognize a signal reflected from the caterpillar 221 according to a swing angle as self reflection of the construction equipment through machine learning. That is, when the upper body 210 of the construction equipment 200 swings, the radars 10 detect the caterpillar 221 of the lower body 220 of the construction equipment 200. Accordingly, a self reflection component by the caterpillar 221 is repeatedly generated at a same location. The processor 42 may repeatedly learn and accumulate a same reflection component that is repeatedly generated at a specific angle as a self reflection component. And the processor 42 may determine a self reflection component based on the accumulated learning information.

Measurement data of the radars 10 determined as a self reflection component may be subjected to masking in the detection area of an object. Specifically, measured coordinate values of the radars 10 determined as a self reflection component may be ignored so that it is no longer a detection target area of an object. More specifically, the processor 42 may not perform additional operations related to obstacle detection and/or avoidance for the measurement data of the radars 10 having the masked coordinate values.

As a result, the mal-detection of the radars 110 may be reduced, and the computational efficiency of the processor 42 may also be increased.

As described above, in an embodiment of the present disclosure, the radar detection device for construction equipment 100 may distinguish self reflection that detects a part of the construction equipment using the radars 10 and the swing angle sensor 30. Accordingly, the radar detection device for construction equipment 100 may improve the problem of obstacle mal-detection, which determines a part of the construction equipment 200, such as the caterpillar 221, as an obstacle.

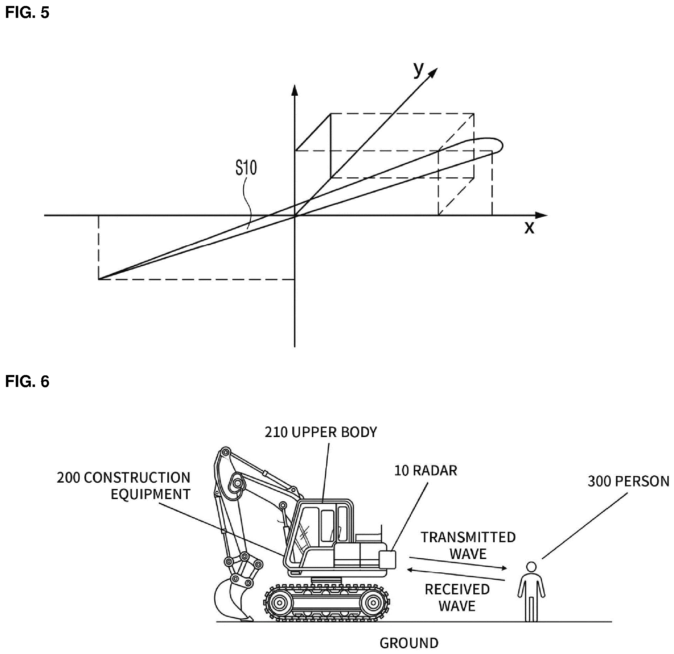

FIG. 5 is a graph illustrating Doppler characteristics of a radar 10 when the construction equipment 200 illustrated in FIG. 2 rotates.

As illustrated in FIG. 5, when the upper body 210 of the construction equipment continues to swing, the output information of the radar 10 may include a Doppler frequency. When the construction equipment 200 rotates, a Doppler frequency plane 510 for each azimuth of the radar 10 may be generated. The detection server 40 may recognize an obstacle at a specific azimuth that exhibits Doppler characteristics deviating from the generated Doppler frequency plane 510 as a proximate obstacle. An object located in the direction in which the upper body 210 of the construction equipment rotates outputs a positive Doppler frequency, while an object located in the opposite direction of the direction in which the upper body 210 of the construction equipment rotates outputs a negative Doppler frequency. That is, based on the Doppler frequency plane 510 according to the azimuth, when an object at a specific azimuth exhibits a positive or negative Doppler frequency with respect to the Doppler frequency plane 310, it may be recognized as a proximate obstacle.

Therefore, the radar detection device for construction equipment 100 according to an embodiment of the present disclosure has an advantage in that it may detect a proximate obstacle based on Doppler frequency characteristics even when the radar 10 swings.

FIG. 6 is a diagram schematically illustrating a case where a radar detection device for construction equipment 100 according to an embodiment of the present disclosure detects a person 300.

As illustrated in FIG. 6, a person 300 may be located around the construction equipment 200. The radar detection device for construction equipment 100 may determine the obstacle as a proximate obstacle when the distance to the obstacle measured by the radar 10 is shorter than a proximate distance threshold value. The proximate distance threshold value may be a maximum working range according to the swing motion of the construction equipment 200.

The radar detection device for construction equipment 100 may detect a Doppler frequency generated when the person 300 moves. Accordingly, the radar detection device for construction equipment 100 has an advantage in that it may distinguish between a stationary object and a moving object.

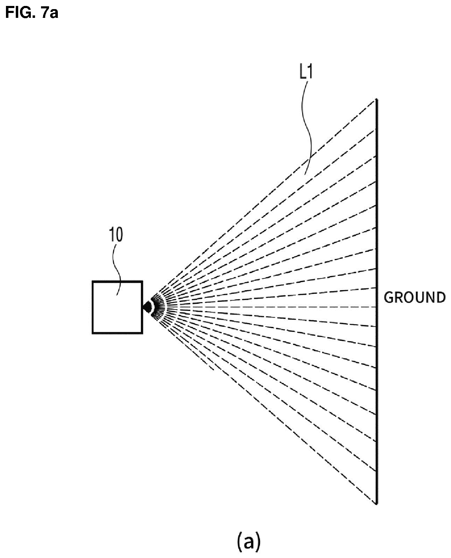

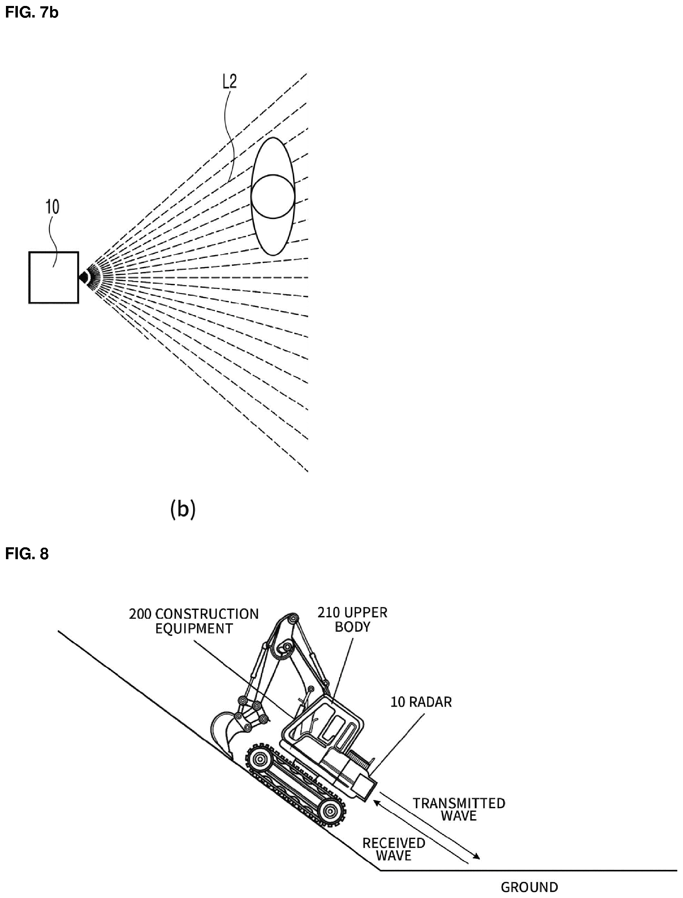

FIG. 7a and FIG. 7b are diagrams schematically illustrating ground reflection of construction equipment 200 in an embodiment of the present disclosure.

The construction equipment 200 can work not only on flat terrain but also on sloped terrain. When the construction equipment 200 is on sloped terrain, the direction of one or more of the three radars 10 may be changed to face the ground. The radar 10 may transmit a signal toward the ground, and a ground reflection phenomenon occurs, which detects a reflection component from the ground. Accordingly, a radar detection device for construction equipment according to the prior art may erroneously recognize the ground as an obstacle.

FIG. 7a shows a distance L1 between the radar 10 and the ground when the construction equipment 200 is located on sloped terrain (an inclined plane). FIG. 7b shows a case where the construction equipment 200 is located on flat terrain and a person 300 is located at a certain distance L2 from the radar 10. In FIG. 7a and FIG. 7b, the radar 10 may determine that there is an object at a same distance (L1=L2). However, in FIG. 7a, a reflected signal is detected in an extensive area, whereas in FIG. 7b, a reflected signal is detected in a narrower area than in FIG. 7a. Accordingly, the radar detection device for construction equipment 100 may distinguish between a reflection by the ground and a reflection by an obstacle (a person).

Meanwhile, in a possible embodiment of the present disclosure, the radar detection device for construction equipment 100 may apply a Kalman filter to the data measured by each sensor to improve the accuracy of the measurement data of the radar 10.

Tilt data measured by the tilt sensor 20 on an inclined plane is used to correct the measurement data of the radar 10. Since the radar 10 measures the straight-line distance to an object, the actual distance between the construction equipment 200, which is extended along the inclined plane, and the object needs to be corrected based on the tilt data measured by the tilt sensor 20.

For example, when the tilt value measured by the tilt sensor 20 on an inclined plane is "a" (degrees), the actual distance to the object can be calculated by multiplying the distance measured by the radar 10 by the cosine value of "a". In this case, if an error occurs in the tilt angle, which is the measurement data of the tilt sensor 20, the corrected distance value with the erroneous tilt angle will also have an error, no matter how accurate the measurement data of the radar 10 is.

The present disclosure may apply a Kalman filter to the measurement data of the tilt sensor 20 to remove noise corresponding to an error among the measurement data obtained from the tilt sensor 20.

Meanwhile, the swing angle sensor 30 also affects the reliability of the measurement data of the radar 10. Specifically, as the swing angle of the construction equipment 200 is determined according to the measured value of the swing angle sensor 30, the radar facing the inclined plane is changed. For example, when the construction equipment 200 is located on an inclined plane and does not swing at the same time, the rear radar becomes the main radar that detects the inclined plane. For example, when the construction equipment 200 is located on an inclined plane and swings 30 degrees to the right at the same time, the right radar, not the rear radar, faces downward of the inclined plane. Therefore, the right radar should be the main radar that detects the inclined plane. That is, the processor 42 selects the main radar that detects the inclined plane according to the swing angle.

In this case, if an error occurs in the rotation angle, which is the measurement data of the swing angle sensor 30, an error also occurs in the selection of the main radar, and since the determination of whether it is an inclined plane is made based on unnecessary data, no matter how accurate the measurement data of the radar 10 is, an error may occur in the determination.

Furthermore, according to the present disclosure, self reflection of the construction equipment 200 may be distinguished based on the rotation angle measured by the swing angle sensor 30, but if an error occurs in the rotation angle, which is the measurement data of the swing angle sensor 30, an error also occurs in the judgment of self reflection. For example, if the rotation angle is 30 degrees but an error occurs as 20 degrees, the measurement data of the radar 10 at a wrong coordinate may be determined as a self reflection.

An embodiment of the present disclosure may improve the reliability of the measurement data of the radar 10 by removing noise from the tilt sensor 20 and/or the swing angle sensor 30.

As is well known, a Kalman filter is an algorithm that estimates an optimal state from data containing noise. It is mainly used when processing sensor data, and provides an accurate estimate by combining a prediction of a state and a measurement, thereby removing noise. A Kalman filter operates in a way that it predicts a future state in a prediction step, and corrects the state estimate by comparing it with an actual measurement in an update step.

In the case of the tilt sensor 20 and the swing angle sensor 30, the measurement data does not change rapidly. Therefore, if a Kalman filter is applied to the data of each sensor, values that change rapidly can be corrected.

As a possible example, in the case of the tilt sensor 20 and the swing angle sensor 30, a state vector to be applied to a Kalman filter may comprise an angle value and an angular velocity value. In this case, the angle may be a measurement vector. In addition, a state transition matrix may be configured to represent a state vector that changes over time. In addition, an observation matrix may be configured to select only measurable elements of the state vector, acting as a link between the state vector of the system and the measurement.

In addition, values to be substituted for an initial state vector, an initial error covariance matrix, a process noise covariance matrix, a measurement noise covariance matrix, a sampling period time, and the like may be determined empirically and experimentally based on the noise characteristics of the sensor, the complexity of the system, the precision of the system design, and the like.

In a possible embodiment of the present disclosure, a Kalman filter may also be applied to the data of the radar 10. Since the data of the radar 10 is also data that does not change rapidly, noise may be removed by applying a Kalman filter. Furthermore, applying a Kalman filter to the data of the radar 10 may reduce false detections due to protrusions when detecting the ground. The ground is where detection data is input over a wide range, and when a protrusion exists in the ground, the data value changes greatly, so applying a Kalman filter to the measurement data of the radar 10 may remove the effect of the protrusion and reduce errors in ground detection.

In this case, the measurement data of the radar 10 to which a Kalman filter is applied may be obtained based on the data of the tilt sensor 20 and/or the swing angle sensor 30, from which noise has been removed by applying a Kalman filter in a first pass.

That is, the measurement data of the radar 10 is primarily selected by applying a Kalman filter to the measurement data of the tilt sensor 20 and/or the swing angle sensor 30, and the primarily selected data of the radar 10 is secondarily selected by applying a Kalman filter, and the secondarily selected data of the radar 10 is used for the detection of an object.

As a possible example, in the case of the radar sensor 10, a state vector to be applied to a Kalman filter may comprise a coordinate value and a power value. In the case of the radar sensor 10, both the coordinate value and the power value may be measurement vectors. In addition, a state transition matrix may be configured to represent a state vector that changes over time. In addition, an observation matrix may be configured to select only measurable elements of the state vector, acting as a link between the state vector of the system and the measurement.

In addition, values to be substituted for an initial state vector, an initial error covariance matrix, a process noise covariance matrix, a measurement noise covariance matrix, a sampling period time, and the like may be determined empirically and experimentally based on the noise characteristics of the sensor, the complexity of the system, the precision of the system design, and the like.

Meanwhile, a more detailed description and formulas related to the meaning of each matrix, the calculation of the Kalman gain, the state update and the error covariance update in the Kalman filter are already well-known technologies, so the description thereof is omitted here.

Through this configuration, the data reliability of the radar 10 is greatly improved, and the detection accuracy of an object may also be further improved.

The processor 42 may repeatedly learn and accumulate reflections by the ground according to the tilt sensor 120 values. And the processor 42 may increase the recognition accuracy of the radar 110 by determining a ground reflection component based on the accumulated learning information.

Meanwhile, a reflection, a reflected signal, and a reflection component of the radar 10, which are repeatedly mentioned in this specification, are signals that are transmitted from the radar 10, reflected by an object, and received, and may also be referred to as a measurement signal, measurement data, an output signal, output data, output information, or the like.

FIG. 8 is a diagram illustrating a case where a radar detection device for construction equipment 100 according to an embodiment of the present disclosure detects the ground.

In FIG. 8, since the construction equipment 200 is located in an inclined environment where the front is high and the rear is low, a ground reflection component may be detected from the radar 10 mounted on the rear of the construction equipment 200.

In an embodiment of the present disclosure, the radar detection device for construction equipment 100 may use the tilt sensor 20 to minimize the effect of a ground reflection component.

In a tilted condition of the construction equipment 200, a reflected signal of the radar 10 may come in over an extensive area. In this case, a reflection component measured at a tilt of a value set according to the value of the tilt sensor 20 may be determined as a reflection by the ground. The detection server 40 may determine the ground even at a shorter distance than the distance to the ground measured on flat ground when the tilt measured from the tilt sensor 20 is equal to or greater than a threshold value. The processor 42 may continuously and repeatedly learn and accumulate a ground reflection component measured in a tilt environment of various grounds. The radar detection device for construction equipment 100 may determine a ground reflection component based on the learning information accumulated by the processor 42, and may determine this ground reflection component as the ground.

Meanwhile, the distance to the ground according to the tilt value learned by the processor 42 may be set as a ground distance threshold value. The ground distance threshold value may be a value that changes according to the tilt of the ground.

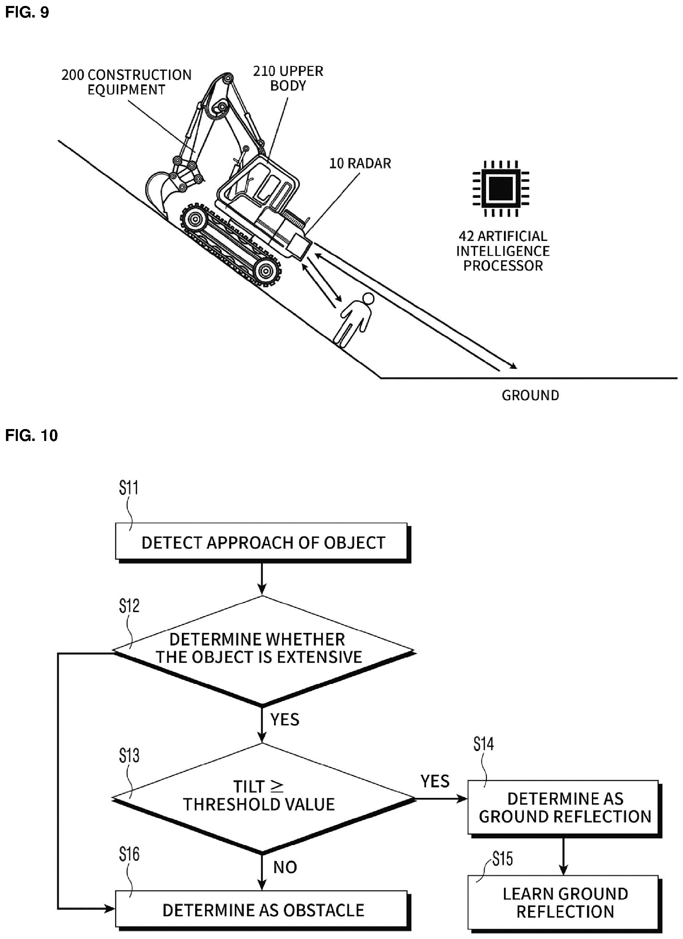

FIG. 9 is a diagram schematically illustrating a case where a radar detection device for construction equipment 100 according to an embodiment of the present disclosure simultaneously detects the ground and a person.

As illustrated in FIG. 9, when the tilt is equal to or greater than a threshold value, the radar detection device for construction equipment 100 recognizes an object located closer than the ground distance threshold value as a proximate obstacle. And the radar detection device for construction equipment 100 may detect a Doppler frequency for the proximate obstacle. Accordingly, the radar detection device for construction equipment 100 may distinguish and recognize a reflection by the ground and a person 300 even when the construction equipment 200 is located on sloped terrain.

As described above, in a possible embodiment of the present disclosure, the processor 42 may determine whether a reflection component of the radar 10 is a ground reflection component through learning.

As an example, the processor 42 may train an artificial intelligence model. In addition, the processor 42 may determine whether a reflection component of the radar 10 is a ground reflection component by executing the trained artificial intelligence model.

An RNN (Recurrent Neural Network) may be used for the training of the artificial intelligence model. As is well known, an RNN is an artificial neural network that processes sequential data such as time series data, and can learn patterns over time by reflecting information from a previous time point in the calculation of the current time point. The RNN calculates the current state based on the input and the hidden state of the previous time point at each time step, and uses it again as an input for the next time step.

In a possible embodiment of the present disclosure, a training data set for training a neural network that determines a ground reflection component may comprise measurement data of the tilt sensor 20 and measurement data of the radar 10 (coordinates, power value, distance).

In a preprocessing step, the training data set may be labeled as the ground or an obstacle (e.g., a person, an object, a wall). For example, the ground and an obstacle may be distinguished and determined and labeled through whether they have various power values at the same coordinates of the measurement data of the radar 10 (a standing object/person), whether they have various power values at various coordinates (an extensive area spanning the azimuth of the radar) (the ground), whether they have a same power value at various coordinates (a wall), whether the construction equipment 200 is located on an inclined plane of a specific tilt or more, and the like. The degree of variation of the coordinate value, the degree of variation of the power value for determining sameness, and the like may be used for learning through prior tests.

In the preprocessing step, the data of the sensors constituting the training data set may have their noise removed by a Kalman filter. The correction of measurement data of the tilt sensor 20, the swing angle sensor 30, and the radar 10 using a Kalman filter has already been described above. In particular, the data of the radar 10 to be used for training may be data that has been re-selected by applying a Kalman filter in a second pass to the data selected after applying a Kalman filter in a first pass to the tilt sensor 20 and the swing angle sensor 30.

Through this preprocessing process, the learning of the neural network may be made faster and more efficient, and the performance of the model may be improved.

When using the trained model, a measured value of the tilt sensor 20, a measured value of the swing angle sensor 30, and a measured value of the radar 10 may be used as input data. In this case, as output data, whether the object detected by the radar 10 is the ground or an obstacle, and if it is an obstacle, the position of the obstacle may be output.

As described above, in a possible embodiment of the present disclosure, the processor 42 may determine whether a reflection component of the radar 10 is a self reflection component through learning.

In a possible embodiment of the present disclosure, a training data set for training a neural network that determines a self reflection component may be composed of measurement data of the swing angle sensor 30 and measurement data of the radar 10 (coordinates, power value, distance). In a preprocessing step, the training data set may be labeled as a caterpillar or an obstacle. For example, a caterpillar may be distinguished and determined and labeled through whether it is a same reflection component (same power value and coordinates) that is repeatedly generated more than a preset specific number of times at a specific swing angle. In this case, the degree of variation of the coordinate value, the degree of variation of the power value for determining sameness, and the like may be used for learning through prior tests.

In the preprocessing step, the data of the sensors constituting the training data set may have their noise removed by a Kalman filter. The correction of measurement data of the tilt sensor 20, the swing angle sensor 30, and the radar 10 using a Kalman filter has already been described above. In particular, the data of the radar 10 to be used for training may be data that has been re-selected by applying a Kalman filter in a second pass to the data selected after applying a Kalman filter in a first pass to the swing angle sensor 30.

Through this preprocessing process, the learning of the neural network may be made faster and more efficient, and the performance of the model may be improved.

When using the trained model, a measured value of the swing angle sensor 30 and a measured value of the radar 10 may be input as input data. In this case, as output data, whether the object detected by the radar 10 is a caterpillar or an obstacle, and if it is an obstacle, the position of the obstacle may be output.

FIG. 10 is a flowchart illustrating a ground detection method of a radar detection device for construction equipment 100 according to an embodiment of the present disclosure.

As illustrated in FIG. 10, the detection server 40 may detect the approach of an object based on the output information of the radar 10 (S11). The radar 10 is mounted on the left, right, and rear of the construction equipment 200, transmits RF signals, and detects an object by a reflected signal.

In step S11, a Kalman filter may be applied to the measurement data of the tilt sensor 20 and the swing angle sensor 30 to improve the reliability of the reflected signal (measurement data) of the radar 10. In addition, a Kalman filter may also be applied to the measurement data of the radar 10. The measurement data of the radar 10 is primarily selected by applying a Kalman filter to the measurement data of the tilt sensor 20 and the swing angle sensor 30, and the selected data may be secondarily selected by applying a Kalman filter. Regarding this, since it has been described in detail in the description of the radar detection device for construction equipment 100, a duplicate description is omitted here.

Next, the detection server 40 may determine whether the detected object is an extensive object (S12). The detection server 40 may determine an object that is simultaneously detected within the azimuth range of the radar 10 as an extensive object. The detection server 40 may determine an object that is detected only in a part of the azimuth range of the radar 10 as an obstacle.

Next, when the detection server 40 determines that the detected object is an extensive object, it may determine whether the tilt of the ground is equal to or greater than a tilt threshold value (S13). The tilt of the ground may be measured by the tilt sensor 20. The tilt threshold value may include values of 10 degrees or more and 20 degrees or less, and may be 15 degrees for example.

When the tilt of the ground is equal to or greater than the tilt threshold value, the detection server 40 may determine the detected object as the ground (S14). And the processor 42 may learn and accumulate ground reflection (S15).

When the tilt of the ground is less than the tilt threshold value, the detection server 40 may determine the detected object as an approaching obstacle (S16).

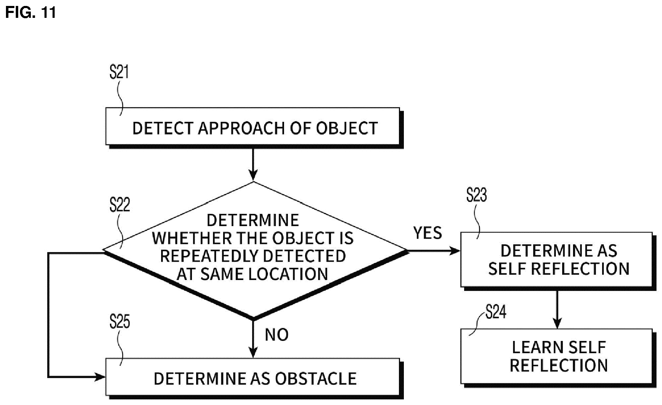

FIG. 11 is a flowchart illustrating a self reflection detection method of a radar detection device for construction equipment 100 according to an embodiment of the present disclosure.

As illustrated in FIG. 11, the detection server 40 may detect the approach of an object based on the output information of the radar 10 (S21). The radar 10 is mounted on the left, right, and rear of the construction equipment 200, transmits RF signals, and detects an object by a reflected signal.

In step S21, a Kalman filter may be applied to the measurement data of the swing angle sensor 30 to improve the reliability of the reflected signal (measurement data) of the radar 10. In addition, a Kalman filter may also be applied to the measurement data of the radar 10. The measurement data of the radar 10 is primarily selected by applying a Kalman filter to the measurement data of the swing angle sensor 30, and the selected data may be secondarily selected by applying a Kalman filter. Regarding this, since it has been described in detail in the description of the radar detection device for construction equipment 100, a duplicate description is omitted here. Next, the detection server 40 may determine whether the detected object is repeatedly detected at a same location (S22). The detection server 40 determines whether the detected object is repeatedly detected as a same reflection component at a specific swing angle using the value output from the swing angle sensor 30. The term "repeatedly" means a preset specific number of times or more.

When the detection server 40 determines that the detected object is repeatedly detected at a same location, it may determine the detected object as self reflection of the construction equipment 200 (S23). And the processor 42 may learn and accumulate self reflection (S24).

When the detection server 40 determines that the detected object is not repeatedly detected at a same location, it may determine the detected object as an obstacle (S25).

As described above, according to an embodiment of the present disclosure, the radar detection device for construction equipment 100 may efficiently detect ground reflection and self reflection using the radar 10, the tilt sensor 20, and the swing angle sensor 30 without providing a high-cost camera, and thereby may improve obstacle detection performance.

The foregoing description of the present disclosure is for illustrative purposes, and a person of ordinary skill in the art to which the present disclosure pertains can understand that the present disclosure can be easily modified into other specific forms without changing the technical spirit or essential features of the present disclosure. Therefore, it is to be understood that the embodiments described above are illustrative in all aspects and not restrictive. For example, each component described as a single type may be implemented in a distributed manner, and likewise, components described as distributed may be implemented in a combined form.

The scope of the present disclosure is indicated by the following claims, and it is to be interpreted that all changes or modified forms derived from the meaning and scope of the claims and their equivalent concepts are included in the scope of the present disclosure.

## Claims

1. A radar detection device for construction equipment with improved radar mal-detection, comprising:
a radar configured to detect an object around the construction equipment;
a tilt sensor configured to detect a tilt of the construction equipment;
a swing angle sensor configured to detect a swing angle of the construction equipment; and
a detection server configured to determine whether an object is present around the construction equipment by communicating with the radar, the tilt sensor, and the swing angle sensor,
wherein the detection server determines whether an object is present around the construction equipment using a tilt value received through the tilt sensor and a reflection component detected by the radar, and when the detected object is determined to be an extensive object, determines the object to be ground,
and wherein: the measured values of the tilt sensor and the swing angle sensor are corrected by applying a Kalman filter; and the reflection component of the radar for determining whether an object is present is selected based on the corrected measured values of the tilt sensor and the swing angle sensor.

2. The radar detection device for construction equipment with improved radar mal-detection of claim 1, wherein
the extensive object is an object simultaneously detected within an azimuth range of the radar.

3. The radar detection device for construction equipment with improved radar mal-detection of claim 1, wherein
the detection server determines a detected object to be ground when a tilt value received through the tilt sensor is equal to or greater than a preset tilt threshold value.

4. The radar detection device for construction equipment with improved radar mal-detection of claim 3, wherein
the detection server further comprises a processor, wherein
the processor repeatedly learns and accumulates a process of determining a detected object to be ground, and determines the object to be ground based on the accumulated learning information.

5. The radar detection device for construction equipment with improved radar mal-detection of claim 1, wherein
the reflection component of the radar for determining whether an object is present is a reflection component secondarily selected by applying a Kalman filter to a reflection component primarily selected based on the corrected measured values of the tilt sensor and the swing angle sensor.

6. A radar detection device for construction equipment with improved radar mal-detection, comprising:
a radar configured to detect an object around the construction equipment;
a swing angle sensor configured to detect a swing angle of the construction equipment; and
a detection server configured to determine whether an object is present around the construction equipment by communicating with the radar and the swing angle sensor,
wherein the detection server determines whether an object is present around the construction equipment using a swing angle value received through the swing angle sensor and a reflection component detected by the radar, and when the detected object is repeatedly detected at a same location, determines the object to be self reflection of the construction equipment,
and wherein: the measured value of the swing angle sensor is corrected by applying a Kalman filter; and the reflection component of the radar for determining whether an object is present is selected based on the corrected measured value of the swing angle sensor.

7. The radar detection device for construction equipment with improved radar mal-detection of claim 6, wherein
the detection server further comprises a processor, wherein
the processor repeatedly learns and accumulates a process of determining a detected object to be self reflection of the construction equipment, and determines the detected object to be self reflection of the construction equipment based on the accumulated learning information.

8. The radar detection device for construction equipment with improved radar mal-detection of claim 6, wherein
the radar outputs a Doppler frequency generated according to a swing motion of the construction equipment, leading to recognition as a proximate obstacle when the Doppler frequency indicates a positive or negative Doppler frequency.

9. A method for detecting an obstacle using a radar detection device for construction equipment with improved radar mal-detection, the method comprising:
a step in which a detection server detects an approach of an object based on output information of a radar;
a step in which the detection server determines whether the detected object is an extensive object;
a step in which the detection server determines whether a tilt of the ground is equal to or greater than a preset threshold value; and
a step in which the detection server determines the detected object to be ground when it is determined that the detected object is an extensive object and the tilt of the ground is equal to or greater than the preset threshold value,
wherein: in the step of detecting the approach of the object, the tilt of the ground is measured using a tilt sensor; a swing angle of the construction equipment is measured using a swing angle sensor; the measured values of the tilt sensor and the swing angle sensor are corrected by applying a Kalman filter; and the output information of the radar for detecting an approach of an object is selected based on the corrected measured values of the tilt sensor and the swing angle sensor.

10. The method for detecting an obstacle using a radar detection device for construction equipment with improved radar mal-detection of claim 9, wherein
in the step of determining whether the object is an extensive object, the detection server determines an object simultaneously detected within an azimuth range of the radar to be the extensive object.
